# EUROPÄISCHE PATENTANMELDUNG

(11) **EP 2 100 689 A1**
(43) Veröffentlichungstag der Anmeldung: **16.09.2009**
(21) Anmeldenummer: 08003727.8
(22) Anmeldetag: 28.02.2008
(51) Int. Cl.: B23K 26/04, G01B 11/02

(54) **Vorrichtung zur Strahlsteuerung und ein Verfahren zur Strahlsteuerung**

(71) Anmelder: SIEMENS AKTIENGESELLSCHAFT, 80333 München (DE)
(72) Erfinder: Arjakine, Nikolai, 10555 Berlin (DE); Jungbluth, Matthias, Dr., 12681 Berlin (DE)

(57) **Zusammenfassung**

Die Erfindung betrifft eine Schweißvorrichtung, bei dem ein Abstand zwischen Laser und Bauteil berührungsfrei bestimmt wird.

## Beschreibung

Die Erfindung betrifft eine Vorrichtung zur Strahlsteuerung und ein Verfahren zur Strahlsteuerung.

Nach einer bestimmten Betriebsstundenanzahl von Heißgaskomponenten von Gasturbinen können diese Komponenten in verschiedenen Bereichen Risse, Anstreifspuren sowie Materialverlust durch Oxidation oder Erosion aufweisen.

Ein übliches Verfahren zur Reparatur dieser Defekte ist das Schweißen.
Zurzeit werden manuelle WIG-, Plasma- und Laserschweißverfahren für die Wiederherstellung von betriebsbeanspruchten Teilen breit verwendet. Das Laserschweißen hat im Vergleich zu den konventionellen Schweißverfahren (WIG- und Plasmaschweißen) einige Vorteile. Bei der schweißtechnischen Bearbeitung von Ni- und Co-Basislegierungen wird der Wärmeeintrag so niedrig wie möglich gehalten. Dies kann mit modernen Laserschweißanlagen gut realisiert werden. Zudem ist dabei auch der Aufwand für die Rekonturierung nach dem Schweißen wesentlich geringer. Die Anwendung des Laserschweißens ist auf Bauteilbereiche begrenzt, zu denen ausreichender Zugang zur Schweißzone gewährleistet werden kann und relativ einfach zu schweißende Geometrien vorliegen. In Servicefällen hat man aber auch mit solchen Bauteilbereichen zu tun, deren Zugänglichkeit sehr problematisch ist und große Unterschiede bei den Defektbefunden von Bauteil zu Bauteil vorliegen. Durch den Einsatz eines handgeführten Lasers können Vorteile des Laserschweißens mit der guten Prozessflexibilität der konventionellen Verfahren kombiniert werden.

Der erreichte Stand der Technik beim Bau von Laserstrahl-Handschweißsystemen ist inzwischen so weit fortgeschritten, dass die modernen Laserstrahlanlagen erlauben, hochwertige manuelle Schweißungen mit verhältnismäßig großen Abschmelzleistungen zu realisieren und eine große Anzahl der Anwendungen der herkömmlichen Schweißverfahren zu ersetzen.

Die notwendige Arbeits- und Prozesssicherheit wird bei den handgeführten Lasersystemen durch eine sogenannte "Sicherheitsnadel" gewährleistet. Diese Nadel ist gleichzeitig der Fokusabstandsregler. Ohne einen metallischen Kontakt zu der zu schweißenden Oberfläche kann der Schweißprozess nicht gestartet werden.
Bei bekannten handgeführten Laserschweißeinrichtungen wurde das Problem mit einer am Laserkopf befestigten "Sicherheitsnadel" in Form eines Metallstifts gelöst.
Durch den Stift, dessen Länge dem optimalen Bearbeitungsabstand entspricht, wird ein Unterschreiten des Minimalabstandes verhindert. Dadurch, dass der Laser nur bei elektrischem Kontakt des Stiftes mit dem Bauteil zünden kann, wird auch ein Überschreiten des optimalen Bearbeitungsabstandes verhindert.

Gleichzeitig wird dadurch sichergestellt, dass der Laserstrahl nur auf das Bauteil treffen kann und Verletzungen des Bedieners oder anderer Personen verhindert werden.
Dazu wird ein Stromkreis über das Bauteil aufgebaut, der durch Kontakt des Metallstiftes mit dem Bauteil geschlossen wird. Nur bei geschlossenem Stromkreis wird oder ist die Strahlsteuerung aktiviert.
Die Handhabbarkeit ist jedoch eingeschränkt.

Es ist daher Aufgabe der Erfindung, oben genanntes Problem zu überwinden.

Die Aufgabe wird gelöst mit einer Vorrichtung gemäß Anspruch 1 und ein Verfahren nach Anspruch 12.

In den Unteransprüchen sind weitere vorteilhafte Maßnahmen aufgelistet, die beliebig miteinander kombiniert werden können, um weitere Vorteile zu erzielen.

Es zeigen:
- Figur 1 bis 4: verschiedene erfindungsgemäße Vorrichtungen,
- Figur 5: eine Gasturbine,
- Figur 6: perspektivisch eine Turbinenschaufel,
- Figur 7: perspektivisch eine Brennkammer und

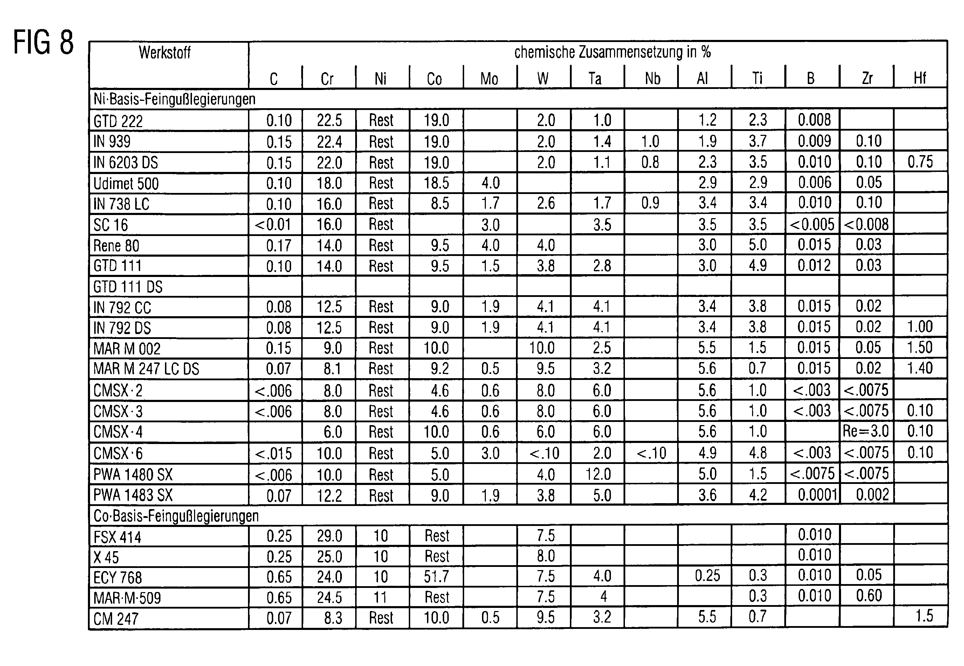

- Figur 8: eine Liste von Superlegierungen.

Die Figuren und die Beschreibung stellen nur Ausführungsbeispiele der Erfindung dar.

Die Erfindung ist **dadurch gekennzeichnet, dass** eine Messung des Bearbeitungsabstandes einer Energiestrahlenquelle 1 zu einer Oberfläche 8 und/oder die Materialbestimmung einer bestrahlten Oberfläche 8 eines Bauteils 3 berührungsfrei erfolgt.

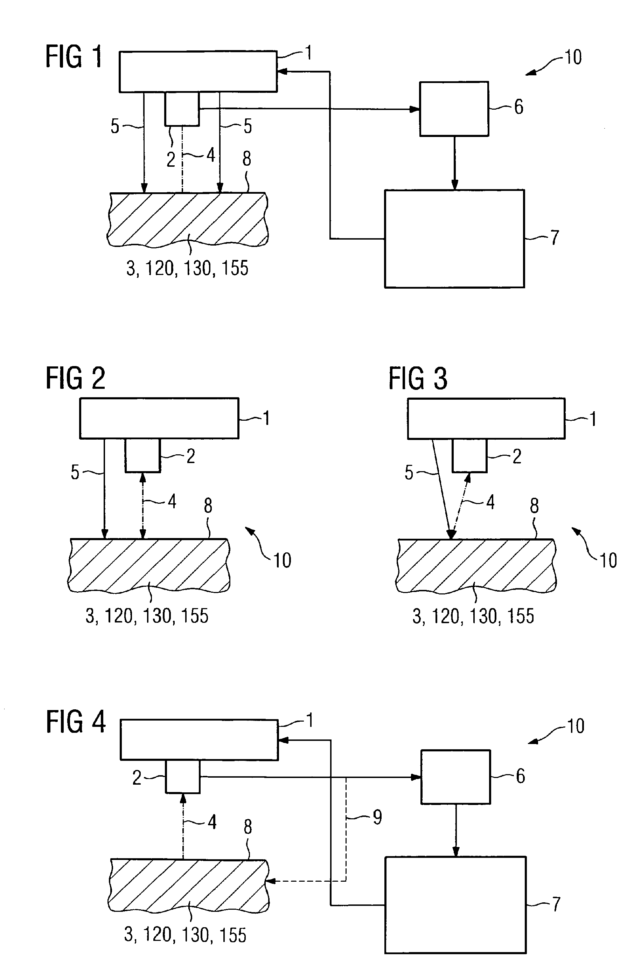

Der grundsätzliche Aufbau ist in Figur 1 dargestellt.

### Vorrichtung

Am Laser 1 (nur beispielhaft erläutert für die Energiestrahlenquelle 1) ist ein Sensor 2 oder eine Sensoreinheit 2, aufweisend einen Sensor oder mehrere Sensoren, zur Abtastung einer Oberfläche 8 des Bauteils 3, 120, 130, 155 vorhanden.

Der Sensor 2 weist eine Sensorachse 4 auf, die vorzugsweise parallel zur Achse der Strahlen 5 der Energiestrahlenquelle 1 verläuft.
Der Sensor 2 ist vorzugsweise so an der Energiestrahlenquelle 1 befestigt, dass die Sensorachse 4 möglichst parallel zur Achse des Laserstrahls 5 ausgerichtet ist (Fig. 2) oder dass sich vorzugsweise beide Achsen im Fokuspunkt des Energiestrahls 5, also des Laserstrahls 5 schneiden (Fig. 3). Entlang der Sensorachse 4 wird von dem Sensor 2 ein Signal ausgesendet, das wiederum vom Sensor 2 als Nutzsignal erfasst wird.

Der Sensor 2 übermittelt ein Nutzsignal an eine Verarbeitungseinheit 6. Liegt das Nutzsignal im an einer Verarbeitungseinheit 6 einstellbaren Sollbereich, erfolgt eine Freigabe der Leistungssteuerung des Lasers 1 in einer Steuerung 7, so dass der Laser 1 durch den Bediener gezündet werden oder in Betrieb bleiben kann.

Das Nutzsignal ist ein Abstand zwischen dem Laser 1 und der Oberfläche 8 und/oder das Material der Oberfläche 8.

In dem Sensor 2 oder der Sensoreinheit 2 sind vorzugsweise folgende Aufgaben vereint:
- Abstandsmessung zwischen Laser 1 und Bauteil 3:
   die Abstandsmessung erlaubt das Zünden des Lasers 1 nur im optimalen Abstandsbereich;
- Bauteildetektion:
   Unterscheidung zwischen erwünschten zu bearbeitenden metallischen, keramischen Bauteilen oder Bauteilen aus Glas und anderen nicht gewünschten Oberflächen, insbesondere Kleidung und Körperteilen (organische Bestandteile) des Bedieners oder anderer Personen.

Die Vorrichtung 10 wird manuell geführt. Die Vorrichtung 10 ist durch einen Menschen tragbar.
Dabei erfolgt während der Bestrahlung der Oberfläche 8, insbesondere permanent, die Abstandmessung bzw. die Materialdetektion. Beim automatisierten Schweißen ist keine Materialdetektion notwendig. Ebenso wird beim Automat die Bewegungsbahn des Lasers vorher festgelegt (beispielsweise durch Abstandmessung) und dann ohne Abstandsmessung abgefahren.
Die Energiestrahlenquelle 1 wird durch die Hand des Operators (Mensch) geführt und nicht durch einen elektrischen Antrieb.

### Abstandsmessung

Die Abstandsmessung mittels des Sensors 2 kann mit folgenden Arbeitsprinzipien ausgeführt werden:
- Magnetinduktion
- Akustik
- Optik, z. B. Laser
- Radar
- Elektrostatik.

Ist der Abstand zu klein oder zu groß, kann der Laser 1 nicht gezündet werden.

Beim automatisierten Schweißen (Automat) wird ein Abstand gemessen und dann der Laser eingeschaltet, sofern keine feste Bewegungsbahn des Lasers vorgegeben ist.
Beim manuellen Schweißen wird der Laser eingeschaltet (beim richtigen Abstand) und bleibt permanent eingeschaltet und wird gegebenenfalls ausgeschaltet aufgrund einer Abstandsmessung.
Verfahrensabläufe sind daher:
Automat: Laser verfahren / Abstandmessung / Laser ein / Laser aus / Laser verfahren / Abstandmessung / Laser ein / Laser aus / ... / ENDE.
Manuell: Abstandmessung / Laser ein / Laser verfahren / ENDE.

### Materialdetektion

Die Arbeitsprinzipien der Abstandsmessung können auch zur Materialdetektion genutzt werden, die sich in Richtung der Sensorachse 4 befindet. So kann mittels magnetischer Induktion bestimmt werden, ob eine metallische Oberfläche 8 vorliegt.

Der Sensor 2 für die Bauteildetektion kann nach dem passiven oder dem aktiven Arbeitsprinzip ausgeführt werden:
Bei der passiven Arbeitsweise detektiert der Sensor 2 ein bearbeitbares Bauteil 3 (leitfähiges Metall) mit dem Wirkprinzip
   - Radar
   - Magnetinduktion.

Bei der aktiven Arbeitsweise (Fig. 4) wird das zu bearbeitende Bauteil 3 elektrisch, magnetisch oder akustisch aktiviert und das Signal von einem geeigneten Sensor 2 detektiert, wodurch die Bauteilidentifikation:
- elektrostatisch
- magnetinduktiv
- akustisch
realisiert wird.

Sowohl zur Abstandmessung oder zur Materialbestimmung sowie Abstandmessung und Materialbestimmung können mehrere Sensorentypen, also verschiedene Messprinzipien gleichzeitig oder nacheinander verwendet werden.

So erfolgt beispielsweise die Abstandsmessung über Radar und die Materialbestimmung mittels Magnetinduktionen.

Die Erfindung ist **dadurch gekennzeichnet, dass** kein mechanischer Kontakt zwischen dem Bauteil 3 und dem Laser 1 oder einem Teil von ihm zur Einhaltung der Arbeits- und Prozesssicherheit notwendig ist. Erreicht wird dieses durch die Strahlsteuerung mittels einem oder mehrerer berührungsfreier Sensoren für die Einhaltung des Bearbeitungsabstands und zur Bauteilidentifikation.

Die beschriebene Lösung weist folgende Vorteile gegenüber dem in ersten beschriebenen Stand der Technik auf:
- Durch Wegfall der Notwendigkeit des ständigen Kontakts des Stifts mit der Bauteiloberfläche treten keine Reibungskräfte auf, wodurch eine gleichmäßigere Bewegung die Qualität der erzeugten Schweißnaht verbessert und Schweißfehler verringert werden. Dieser Vorteil wird insbesondere bei ungleichmäßigen Oberflächen oder lokalen Hindernissen vergrößert.
- Dadurch, dass kein von Hindernissen freier Bewegungspfad neben der Schweißnaht erforderlich ist, ist auch das Bearbeiten kompliziert geformter Bauteile möglich. Der Wegfall einer bei mehrlagigen Nähten eventuell notwendigen zusätzlichen Säuberung des Nahtbereiches zwischen den Durchgängen behebt Einschränkungen hinsichtlich möglicher Temperaturregimes.
- Bei Bauteilen mit mehrfach gekrümmter Nahtlinie erfolgt eine Handhabungserleichterung durch den Wegfall der Nachführung des Stifts.
- Durch die Auskopplung des Abstandsignals in eine mechanische Handhabungshilfe ist eine einfache Teilmechanisierung bis hin zur Verwendung der Daten zur aktiven Abstandsregelung in einem Manipulator möglich.

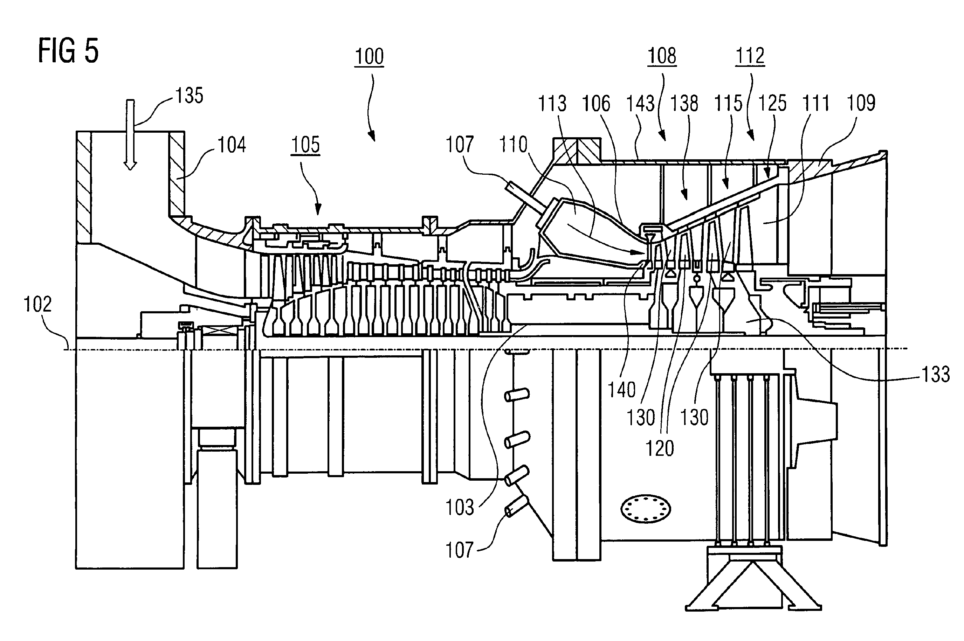

Die Figur 5 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrA1X; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

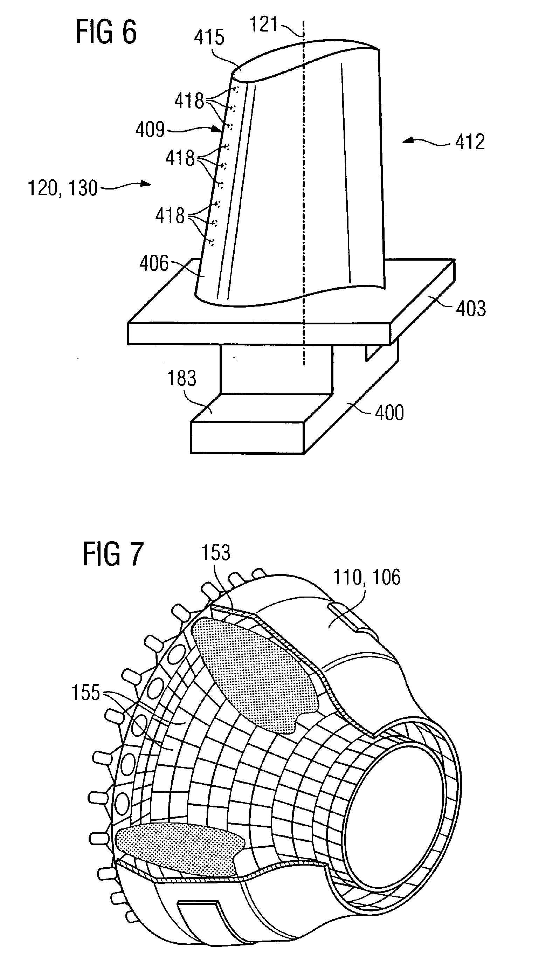

Die Figur 6 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).
Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.
Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 7 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.
Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

## Patentansprüche

1. Manuell handhabbare und manuell verfahrbare Vorrichtung (10),
die aufweist:
eine Energiestrahlenquelle (1),
die (1) eine Oberfläche (8) eines zu bearbeitenden Bauteils (3, 120, 130, 155) bestrahlen kann,
insbesondere aufschmelzen kann,
zumindest einen Sensor (2),
der (2) während der Bestrahlung der Oberfläche (8) berührungsfrei einen Abstand zwischen der Energiestrahlenquelle (1) und der Oberfläche (8) des Bauteils (3) messen kann
und/oder
das Material der bestrahlten Oberfläche (8) bestimmen kann sowie
eine Steuerung (7) der Energiestrahlenquelle (1),
die (7) in Abhängigkeit von der Auswertung des Signals des Sensors (2) aufgrund der Abstandmessung und/oder der Materialbestimmung die Leistung (P) der Energiestrahlenquelle (1) regeln kann.

2. Vorrichtung nach Anspruch 1,
bei dem der Sensor (2) einen Radarsensor umfasst.

3. Vorrichtung nach Anspruch 1 oder 2,
bei dem der Sensor (2) einen Magnetsensor umfasst.

4. Vorrichtung nach Anspruch 1, 2 oder 3,
bei dem der Sensor (2) einen optischen Sensor umfasst.

5. Vorrichtung nach Anspruch 1,
bei dem die Energiestrahlenquelle (1) ein Schweißgerät ist.

6. Vorrichtung nach Anspruch 1 oder 5,
bei dem die Energiestrahlenquelle (1) ein Laser ist.

7. Vorrichtung nach Anspruch 1 oder 5,
bei dem die Energiestrahlenquelle (1) ein Plasmaerzeuger ist.

8. Vorrichtung nach Anspruch 1, 2, 3, 4, 5, 6 oder 7,
bei dem der Sensor (2) an der Energiestrahlenquelle (1) befestigt ist.

9. Vorrichtung nach Anspruch 1, 2, 3, 4, 5, 6, 7 oder 8, bei dem der Sensor (2) nur das Material einer Oberfläche (8) bestimmen kann,
die (8) von Strahlen (5) der Energiestrahlenquelle (1) bestrahlt wird.

10. Vorrichtung nach Anspruch 1, 2, 3, 4, 5, 6, 7 oder 8, bei dem der Sensor (2) nur den Abstand zwischen der Energiestrahlenquelle (1) und der Oberfläche (8) des Bauteils (3) messen kann.

11. Vorrichtung nach Anspruch 1, 2, 3, 4, 5, 6, 7 oder 8, bei dem der Sensor (2) das Material einer Oberfläche (8) bestimmen kann,
die (8) von Strahlen (5) der Energiestrahlenquelle (1) bestrahlt wird und
bei dem der Sensor (2) den Abstand zwischen der Energiestrahlenquelle (1) und der Oberfläche (8) des Bauteils (3) messen kann.

12. Verfahren zum Bestrahlen,
insbesondere zum Schweißen,
eines Bauteils (3, 120, 130, 155),
insbesondere mittels einer Vorrichtung (10) nach einem oder mehreren der vorangegangenen Ansprüche,
bei dem eine Energiestrahlenquelle (1) eine Oberfläche (8) des Bauteils (3, 120, 130, 155) bestrahlt,
bei dem ein Sensor (2) berührungsfrei den Abstand zwischen Energiestrahlenquelle (1) und der Oberfläche (8) des Bauteils (3) misst
und/oder
das Material der bestrahlten Oberfläche (8) bestimmt und bei dem durch eine Steuerung (7) der Energiestrahlenquelle (1) in Abhängigkeit von der Auswertung des Signals des Sensors (2) aufgrund der Abstandsmessung oder der Materialbestimmung
die Leistung (P) der Energiestrahlenquelle (1) geregelt wird.

13. Verfahren nach Anspruch 12,
bei dem die Leistung (P) der Energiestrahlenquelle (1) nur größer null Watt ist oder sein darf,
wenn ein Energiestrahl (5) der Energiequelle (1) auf das Bauteil (3) gerichtet ist.

14. Verfahren nach Anspruch 12 oder 13,
bei dem die Leistung (P) der Energiestrahlenquelle (1) nur dann größer null Watt ist oder sein darf,
wenn der Sensor (2) einen bestimmten Abstandsbereich zwischen der Energiestrahlenquelle (1) und Oberfläche (8) des Bauteils (3) misst,
wobei der Abstandsbereich vorzugsweise einen minimalen Abstand und einen maximalen Abstand aufweist.

15. Verfahren nach Anspruch 12, 13 oder 14,
bei dem als Sensor (2) ein Radarsensor verwendet wird.

16. Verfahren nach Anspruch 12, 13, 14 oder 15,
bei dem als Sensor (2) ein Magnetsensor verwendet wird.

17. Verfahren nach Anspruch 12, 13, 14, 15 oder 16,
bei dem als Sensor (2) ein optischer Sensor verwendet wird.

18. Verfahren nach Anspruch 12, 13 oder 14,
bei dem ein Schweißgerät als Energiestrahlenquelle (1) verwendet wird.

19. Verfahren nach Anspruch 12, 13, 14 oder 18,
bei dem als Energiestrahlenquelle (1) ein Laser verwendet wird.

20. Verfahren nach Anspruch 12, 13, 14 oder 18,
bei dem als Energiestrahlenquelle (1) ein Plasmaerzeuger verwendet wird.

21. Verfahren nach Anspruch 12, 15, 16, oder 17,
bei dem der Sensor (2) das Material der bestrahlten Oberfläche (8) und den Abstand zur bestrahlten Oberfläche (8) bestimmt.

22. Verfahren nach Anspruch 12 oder 21,
bei dem die Leistung (P) der Energiestrahlenquelle (1) nur dann größer null Watt ist oder sein darf,
wenn das Material der bestrahlten Oberfläche (8) Metall, Glas oder Keramik ist.

23. Verfahren nach Anspruch 22,
bei dem die Leistung (P) der Energiestrahlenquelle (1) null Watt ist bzw. die Energiestrahlenquelle (1) nicht eingeschaltet werden kann,
wenn der bestrahlte Bereich des Energiestrahls (5) auf Kleidung oder organisches Material gerichtet ist.

24. Verfahren nach einem oder mehreren der Ansprüche 1 bis 23,
bei dem die Abstandmessung und/oder Materialbestimmung während der Bestrahlung der Oberfläche (8),
insbesondere permanent,
erfolgt.

25. Verfahren nach einem oder mehreren der Ansprüche 1 bis 23,
bei dem die Energiestrahlenquelle (1) manuell verfahren wird.
